# EUROPÄISCHE PATENTANMELDUNG

(11) **EP 1 914 043 A1**
(43) Veröffentlichungstag der Anmeldung: **23.04.2008**
(21) Anmeldenummer: 07019886.6
(22) Anmeldetag: 11.10.2007
(51) Int. Cl.: B25J 5/02

(54) **Vorrichtung zur geradlinigen Verlagerung mindestens eines Wagens und Verfahren zum Standardisieren einer solchen**

(30) Priorität: 17.10.2006 DE 102006048894
(71) Anmelder: KUKA Roboter GmbH, 86165 Augsburg (DE)
(72) Erfinder: Hodapp, Lugbert, 86465 Welden (DE)
(74) Vertreter: Lempert, Jost

(57) **Zusammenfassung**

Die Erfindung eine Vorrichtung zur geradlinigen Verlagerung mindestens eines Wagens (2) mit einer Trägerstruktur (1) und Schienen (4.1,4.2,4.3) zur Führung des mindestens einen Wagens. Ferner betrifft die Erfindung ein Verfahren zum Standardisieren einer Vorrichtung zum geradlinigen Verlagern mindestens eines Wagens hinsichtlich variierender Anforderungen des Verlagerungsweges, wobei die Vorrichtung eine Trägerstruktur und Schienen zur Führung des mindestens einen Wagens aufweist.

Zur einfachen und kostengünstigen Anpassung an verschiedenartigste Anforderungsprofile wird vorgeschlagen, dass zumindest die Trägerstruktur (1) aus Einzelmodulen einer Mehrzahl von Modulklassen aufgebaut ist, von denen wenigstens eine Modulklasse Einzelmodule unterschiedlich standardisierter Länge umfasst, wobei die Trägerstruktur durch Auswahl von Einzelmodulen möglichst großer standardisierter Länge zusammengestellt ist. Die genannte Aufgabe wird weiterhin durch ein gattungsgemäßes Verfahren gelöst.

## Beschreibung

Die Erfindung betrifft eine Vorrichtung zur geradlinigen Verlagerung mindestens eines Wagens mit einer Trägerstruktur und Schienen zur Führung des mindestens einen Wagens.

Ferner betrifft die Erfindung ein Verfahren zum Standardisieren einer Vorrichtung zum geradlinigen Verlagern mindestens eines Wagens hinsichtlich variierender Anforderungen des Verlagerungsweges, wobei die Vorrichtung eine Trägerstruktur und Schienen zur Führungens des mindestens einen Wagens aufweist.

Eine gattungsgemäße Vorrichtung ist aus der Robotik bekannt und wird auch als Linearführung bezeichnet. Derartige Linearführungen umfassen Führungselemente, beispielsweise in Gestalt eines Schienenpaars, und verleihen dem oder den Roboter(n) einen zusätzlichen Freiheitsgrad in Form einer möglichst reibungsfreien Translation in vertikaler Richtung entlang einer geradlinig verlaufenden Bahn. Der von dem jeweiligen Roboter überwundene Verlagerungsweg entlang dieser Bahn wird auch als Hub bezeichnet. Der Nennhub ist als der maximal mögliche Verlagerungsweg des Roboters entlang der Bahn definiert. Dabei gilt zu beachten, dass der Nennhub in den meisten Fällen kleiner ist als die Gesamtlänge der Führungselemente, da beispielsweise die Abmessungen des schienengeführten Wagens an den endseitigen Begrenzungen der Führungselemente mit berücksichtigt werden müssen.

Entsprechend den zahlreichen Anwendungsgebieten von Robotern insbesondere im industriellen Umfeld ist eine jeweils zugeordnete Linearführung verschiedenartigsten Anforderungsprofilen unterworfen, insbesondere unterschiedlichen Nennhüben und Abmessungen der gesamten Anlage in Verbindung mit vorgegebenen Linearitätseigenschaften der Führung, Steifigkeit, Betriebssicherheit, etc. Um einem jeweiligen Anforderungsprofil gerecht zu werden, ist eine prinzipielle Neukonstruktion der Linearführung erforderlich, was erheblichen Zeit- und Kostenaufwand verursacht. Deshalb wäre es wünschenswert, die bekannten konstruktiven Eigenschaften bereits gefertigter Linearführungen weitestgehend zu übernehmen, wobei die erforderlichen Änderungen dennoch die Stabilitäts- und Führungseigenschaften der Anlage nicht beeinträchtigen sollen. Jedoch ist die Anpassung eines bereits gefertigten Gesamtsystems äußerst problematisch, da die Funktionsweise einzelner Komponenten genau aufeinander abgestimmt sind, diese Abstimmung jedoch einem jeweils spezifischen Anforderungsprofil entspricht. So kann beispielsweise durch einfaches Hinzufügen eines Wegabschnitts zu bereits vorhandenen Führungselementen eine ausreichende Linearführung des hinzugefügten Abschnitts bzw. eine geforderte Stabilität der Gesamtanordnung nicht mehr gewährleistet sein. Weiterhin ist auch die Spezialanfertigung eines derartigen Wegabschnitts vergleichsweise aufwändig und unökonomisch.

Hiervon ausgehend liegt der Erfindung die Aufgabe zugrunde, eine Vorrichtung und ein Verfahren der eingangs genannten Art zu schaffen, die unter Vermeidung der vorgenannten Nachteile auf konstruktiv einfache und kostengünstige Weise an verschiedenartigste Anforderungsprofile anpassbar ist und dabei einer einfachen Anwendbarkeit und geforderten Stabilitäts- und Führungseigenschaften Rechnung trägt.

Erfindungsgemäß wird die genannte Aufgabe mit einer Vorrichtung der eingangs genannten Art gelöst, welche dadurch gekennzeichnet ist, dass zumindest die Trägerstruktur aus Einzelmodulen einer Mehrzahl von Modulklassen aufgebaut ist, von denen wenigstens eine Modulklasse Einzelmodule unterschiedlich standardisierter Länge umfasst, wobei die Trägerstruktur durch Auswahl von Einzelmodulen möglichst großer standardisierter Länge zusammengestellt ist.

Demgemäß sieht ein gattungsgemäßes Verfahren zur Lösung der genannten Aufgabe vor, dass zumindest die Trägerstruktur aus Einzelmodulen einer Mehrzahl von Modulklassen aufgebaut wird, von denen wenigstens eine Modulklasse Einzelmodule unterschiedlich standardisierter Länge umfasst, wobei die Trägerstruktur durch Auswählen von Einzelmodulen möglichst großer standardisierter Länge zusammengestellt wird.

Grundgedanke der Erfindung ist also eine baukastenartige Zusammensetzung zumindest der Trägerstruktur aus Einzelmodulen unterschiedlicher Modulklassen und eine damit einhergehende Standardisierung ihres konstruktiven Aufbaus für verschiedene oder vielseitige Anforderungsprofile. Dabei ist insbesondere vorgesehen, dass wenigstens eine der Modulklassen unterschiedlich ausgebildete Einzelmodule umfasst, so dass eine bedarfsmäßige Zusammenstellung nicht nur hinsichtlich der Anzahl sondern auch hinsichtlich der verschiedenartigen Ausbildungen der Einzelmodule erfolgen kann. Zum einen wird dadurch eine zeitsparende und dennoch maßgeschneiderte Konfektionierung der Linearführung gemäß dem Anforderungsprofil ermöglicht. Die vorgegebenen Prinzipien, nach welchen die Zusammenstellung der Einzelmodule erfolgt, können insbesondere auf langjährigen empirischen Erfahrungen oder Analogieschlüssen mit bereits konfektionierten Trägerstrukturen oder auf theoretischen Berechnungen basieren. Dadurch wird zum anderen erreicht, dass vorgegebene Stabilitäts-, Linearitäts- und Betriebsanforderungen eingehalten werden.

Eine konkrete Ausgestaltung zum Erreichen des oben beschriebenen konstruktiv möglichst einfachen und dennoch stabilen führungs- und betriebssicheren Zusammenbaus der Trägerstruktur sieht dabei vor, dass Einzelmodule in wenigstens einer Modulklasse hinsichtlich ihrer Länge in Verlagerungsrichtung des Wagens unterschiedlich ausgebildet sind. Im Rahmen der vorgegebenen Prinzipien kann dabei die Anordnung von Einzelmodulen einer Modulklasse mit möglichst geringem Längenunterschied, insbesondere einem Längenunterschied gleich null, vorgesehen sein. Eine derartige Auswahl der Einzelelemente entspricht in vielen Fällen einem gewünschten Anforderungsprofil in optimaler Weise. Eine vorteilhafte Auswahl und Anordnung einer Reihe von Einzelmodulen mit unterschiedlicher Länge ist besonders wichtig bei einer Zusammenstellung von Einzelelementen hinsichtlich der vorgegebenen Gesamtlänge und/oder der Steifigkeit der von diesen gebildeten Trägerstrukturen und/oder eines vorgegebenen Verfahrenswegs des Wagens.

Demgemäß wird in einem erfindungsgemäßen Verfahren ein geeignetes Auswählen wenigstens eines Einzelmoduls bezüglich seiner Länge und/oder seiner Längendifferenz in Verlagerungsrichtung des Roboters als Unterscheidungsmerkmal zu anderen Einzelmodulen derselben Modulklasse vorgeschlagen. Bevorzugt werden insbesondere wenigstens zwei hinsichtlich eines Unterscheidungsmerkmals identische und/oder unterschiedliche Einzelmodule aus derselben Modulklasse ausgewählt. Im Rahmen der vorgegebenen Prinzipien des Auswählens von Einzelmodulen kann insbesondere vorgesehen sein, dass wenigstens zwei hinsichtlich eines Unterscheidungsmerkmals einander korrespondierende Einzelmodule aus unterschiedlichen Modulklassen ausgewählt werden. Beispielsweise können durch die Auswahl bestimmter Wegabschnitte von Führungselementen, durch welche der Verlagerungsweg gebildet ist, korrespondierende Einzelmodule mit entsprechenden Eigenschaften zur Stabilisierung dieser Wegabschnitte des gesamten Verlagerungswegs notwendig sein.

Eine wesentliche Ausgestaltungsmöglichkeit von den Modulklassen sieht vor, dass wenigstens eine derselben durch Einzelmodule in Form von Schienenpaaren gebildet ist, welche dem Verlagerungsweg bzw. einer Fahrbahn für den Wagen entsprechen. Um diese Funktion zu erfüllen, müssen die Schienenpaare eine Oberfläche hoher Güte aufweisen und sind deshalb vorzugsweise geschliffen und/oder gehärtet. Dabei können die Schienen in einer grundlegenden Ausführungsform rechtwinklig bezüglich ihrer Länge in Verlagerungsrichtung des Wagens geschnitten sein. Zum Erreichen hochwertiger Linearitätseigenschaften und verbesserter Laufruhe des Wagens kann in einer alternativen Ausführung vorgesehen sein, dass die Schienenpaare hinsichtlich ihrer Länge in Verlagerungsrichtung des Wagens in einem nicht-rechtwinkligen Winkel geschnitten sind, insbesondere in einem Winkel von 15° gegenüber eines rechtwinkligen Schnitts. Durch einen somit gebildeten schrägen Winkel zwischen aneinander grenzenden Schienenpaaren werden Laufunruhen des Wagens dadurch verhindert, dass dieser nicht abrupt über den Angrenzungspunkt der Schienenpaare hinwegspringen muss, sondern allmählich über den schrägwinkligen Angrenzungsbereich hinwegleiten kann.

Ein erfindungsgemäßer Baukasten zeichnet sich bevorzugt dadurch aus, dass die Anzahl verschiedenartig ausgebildeter Einzelmodule jeweils einer Modulklasse möglichst gering ist, so dass einerseits einem gewünschten gestalterischen Freiraum entsprochen wird, andererseits dennoch die Übersicht bei der Zusammenstellung der komplexen Gesamtanordnung hinsichtlich der dabei erzielten Linearitäts- und Stabilitätseigenschaften erhalten bleibt.

Eine Weiterbildung sieht deshalb vor, dass die Modulklasse der Schienenpaare Einzelmodule mit wenigstens zwei, bevorzugt vier, standardisierten Längen umfasst. Hierbei sollten möglichst viele der Schienenpaare die größte standardisierte Länge aufweisen, um die Anzahl der Stöße aneinander grenzender Schienenpaare möglichst gering zu halten. Die verbleibende Restlänge zur Bildung der Gesamtlänge ist dann durch Schienenpaare mit entsprechend kleinerer Länge gebildet. Aus fertigungstechnischen Gründen ist der maximalen Länge eines Schienenpaars Grenzen gesetzt. So kann die maximale Länge eines Schienenpaars beispielsweise 3.015,9 mm betragen. In diesem konkreten Fall kann vorgesehen sein, dass die Modulklasse der Schienenpaare durch Einzelmodule mit standardisierten Längen ergänzt wird, welche einem Betrag von 1.005,3 mm, 1.507,9 mm oder 2.010,6 mm entsprechen.

Zur Gewährleistung eines vorteilhaften Antriebs des Wagens, bei welchem eine Beeinflussung der Linearitätseigenschaften bzw. der Laufruhe äußerst gering ist, wird vorgeschlagen, dass wenigstens eine Modulklasse durch Einzelmodule in Form von Zahnstangen zur Aufnahme eines Zahnrades an dem Antrieb des Wagens gebildet ist. Bei der Zusammenstellung der Zahnstangen-Einzelmodule ist es (beispielsweise aus Kostengründen) nicht erforderlich, dass die Gesamtlänge der Zahnstangen gleich der Gesamtlänge der angeordneten Schienenpaare ist. Die Gesamtlänge der Zahnstangen kann beispielsweise um die Breite des Wagens verkürzt sein.

Um den verschiedenen Anforderdungsprofilen zu entsprechen, kann vorgesehen sein, dass auch die Modulklasse der Zahnstangen Einzelmodule mit standardisierten Längen aufweist. Diese können insbesondere hinsichtlich der Ausdehnung der in diesen ausgebildeten Zähnen und/oder hinsichtlich der Ausdehnung des Wagens in Verlagerungsrichtung des Wagens vorteilhaft bemessen ein. Die jeweilige Beabstandung zweier Zähne auf der Zahnstange muss dabei der Beabstandung zweier Zähne des Zahnrades entsprechend gewählt sein. So können beispielsweise Zahnräder nach einer Norm gemäß DIN 780-1 verwendet werden. Die entsprechende Normierung zur Beabstandung der Zähne wird auch als Modul m bezeichnet, welches gemäß der Beziehungen m=p/π berechnet wird, wobei π die Kreiszahl ist und p dem Abstand von Zahnmitte zu Zahnmitte des Teilkreisdurchmessers oder Arbeitsdurchmessers des Zahnrades entspricht. Der Norm DIN 780-1 entsprechen somit genormte Größen oder Module von 0,3; 0,5; 0,7; ...; 1; 1,25; 1,5, ... 4,5; 5; 6; 7 ... usw. Bevorzugt wird eine Herstellung der Zahnstangen in Modul 5 vorgeschlagen, welches einem Längenmaß von 78,54 mm für fünf Zähne entspricht. Eine bevorzugte standardisierte Zahnstange weist 120 Zähne auf, so dass sich eine Länge dieses Einzelmoduls von 1.884,96 mm ergibt. Demgemäß ist sichergestellt, dass die jeweiligen Enden eines Einzelmoduls aus der Modulklasse der Zahnstangen in der Mitte des Zahngrundes zwischen zwei Zähnen angeordnet sind, d.h. eine jeweilige Zahnstange weist eine Länge auf, durch welche sichergestellt ist, dass nur vollständige Zähne auf dieser vorhanden sein können und beispielsweise kein Zahn in der Mitte durchgeschnitten ist.

Eine weitere Anforderung an die Einzelmodule aus der Modulklasse der Zahnstangen kann darin bestehen, den Längen der Modulklasse der Schienenpaare entsprechende Längen aufzuweisen, so dass eine erfindungsgemäße Anordnung nach den vorgegebenen Prinzipien ermöglicht wird. Insbesondere wird vorgeschlagen, dass die Modulklasse der Zahnstangen Einzelmodule mit standardisierten Längen aufweist, die hinsichtlich einer parallelen Anordnung von Zahnstangen und Schienen vorteilhaft bemessen sind. Dabei unterscheiden sich die Gesamtlängen der Zahnstangen derart von der Gesamtlänge der angeordneten Schienenpaare, dass die angrenzenden Bereiche, d.h. die Stöße zweier Schienen nicht an deselben Stelle des Hubes eines angrenzenden Bereichs, d.h. der Stöße zweier Zahnstangen lokalisiert sind. Somit werden die linearen Führungseigenschaften so wenig wie möglich beeinflusst, d.h. eine besonders hohe Steifigkeit des gesamten Aufbaus der Lineareinheit erreicht.

Die Anordnung, Befestigung und Stabilisierung des durch die Einzelmodule der Schienenpaare gebildeten Verlagerungswegs kann durch wenigstens einen Schienenträger realisiert sein, auf welchem auch die Montage der Zahnstangen erfolgen kann. Gemäß dem Baukastenprinzip wird hierzu vorgeschlagen, dass wenigstens eine Modulklasse durch Einzelmodule in Form von Schienenträgerelementen gebildet ist. Dabei kann die Anordnung der Schienenpaare auf einem Schienenträgerelement erfolgen, wobei die Gesamtlänge aller benötigten Schienenpaare mit der Länge der Trägerstruktur nach den vorgegebenen Prinzipien korrespondiert.

Zur Bodenbefestigung und Stabilisierung der Schienenträgerelemente wird wiederum vorgeschlagen, dass wenigstens eine Modulklasse durch Einzelmodule in Form von Fundamentplatten zur Bodenbefestigung der Schienenträgerelemente gebildet ist. In der Modulklasse der Fundamentplatten ist bevorzugt nur ein standardisiertes Einzelmodul enthalten. Um dennoch variierenden Anforderungsprofilen gerecht zu werden, ist vorgesehen, dass die Anzahl und die gegenseitige Beabstandung angeordneter Fundamentplatten mit der Länge des zugeordneten Schienenträgerelements nach den vorgegebenen Prinzipien korrespondiert. So sind die Fundamentplatte an jeweils vorgegebenen Stellen mit der Unterseite der Schienenträgerelemente verbunden und können Bohrungen zur Schraubverbindung mit den Schienenträgern aufweisen. Wesentlich ist hierbei, dass die Anzahl und Abstände der Fundamentplatten einen wesentlichen Einfluss auf die Steifigkeit der Gesamtvorrichtung nimmt. Aus diesem Grund ist die Anordnung jeweils einer Fundamentplatte mit einer geringen Beabstandung von den jeweiligen Enden der Gesamtvorrichtung vorgesehen, welche beispielsweise einem fest vorgegebenen Betrag von 115 mm entsprechen kann. Für die verbleibenden Fundamentplatten ist gemäß den vorgegebenen Prinzipien vorgesehen, dieselben unabhängig von der Gesamtlänge der Vorrichtung über einen wesentlichen oder größtmöglichen Längenabschnitt mit einer fest vorgegebenen gegenseitigen Relativbeabstandung anzuordnen, welche einer standardisierten Beabstandung von beispielsweise 1.005 mm entsprechen kann. In einem verbleibenden Längenabschnitt in den äußeren Bereichen der Vorrichtung, welcher jeweils abhängig von der Gesamtlänge der Vorrichtung sein kann, ist die Anordnung der Fundamentplatten in einer erweiterten Relativbeabstandung vorgesehen, welche insbesondere 1.131 mm oder 1.383 mm entsprechen kann. Dabei wird bevorzugt zwischen der jeweils äußersten Fundamentplatte und den angrenzenden Fundamentplatten mit der erweiterten Relativbeabstandung die standardisierte Beabstandung von beispielsweise 1.005 mm gewählt. Ein derartiges Anordnungsprinzip der Fundamentplatten, welches auf empirischen Ermittlungen beruht, ermöglicht eine hohe Steifigkeit der Gesamtvorrichtung auch bei variierenden Anforderungen an die Gesamtlänge derselben, welche beispielsweise wiederum einem vorgegebenen Nennhub entsprechen muss. Eine Ausnahmen bilden wegen der kurzen Gesamtlänge die Anordnungen für Nennhübe in dem Bereich von 1.500 mm und 2.500 mm. In diesem Bereich sind nur Beabstandungen der Fundamentplatten von 1.005 mm und 1.383 mm vorgesehen.

In einer bevorzugten Weiterbildung ist vorgesehen, dass auch der Wagen aus Einzelmodulen einer Mehrzahl von Modulklassen zusammengesetzt ist. Diese können einen wiederum aus Einzelkomponenten zusammengesetzten Fahrwagen und eine Konsole zur Aufnahme eines Roboters umfassen.

Die Anfangs- und Endträger sind daduch gebildet, dass an einem standardmäßigen Zwischenträger entweder linksseitig oder rechtsseitig ein Bügel angeschraubt ist

Gemäß bevorzugter Weiterbildung ist weiterhin vorgesehen, dass die Trägerstruktur aus einem Anfangs- und Endträger und gegebenenfalls wenigstens einem Zwischenträger gebildet ist, die in Verlagerungsrichtung des Wagens hintereinander angeordnet sind. In bevorzugter Ausführung sind dabei Anfangs-, Zwischen- und Endträger durch eine jeweils spezifische Zusammenstellung von jeweiligen Einzelmodulen wenigstens einer Modulklasse gebildet. Dabei ist vorgesehen, dass Anfangs-, Zwischen- und Endträger jeweils ein Schienenträgerelement mit standardisierten Längen aufweist. Dadurch sind Nennhübe beliebiger Länge realisierbar. Für Nennhübe zwischen 1.000 mm und 8.500 mm kann beispielsweise die Anordnung eines einzelnen Einzelträgers ausreichend sein, dessen entsprechende Gesamtlänge zwischen 2.493 und 10.033 mm liegt. Wie bereits erläutert unterscheidet sich die Gesamtlänge der Trägerstruktur von dem Nennhub aufgrund Längserstreckung des Wagens, welche im vorliegenden Fall 1.493 mm beträgt. Für Nennhübe zwischen 8.500 und 18.500 mm ist eine Zusammensetzung der Trägerstruktur aus einem Anfangs- und Endträger vorgesehen, wobei nach den vorgegebenen Prinzipien zwei zumindest annähernd gleichlange Träger vorgesehen sind. Für Nennhübe größer als 18.500 mm ist vorgesehen, zwischen Anfangs- und Endträger einen Zwischenträger anzuordnen, welcher nach den vorgegebenen Prinzipien eine maximale Länge von 10.033 mm aufweist und sowohl Anfangs- als auch Endträger eine zumindest annähernd gleiche Länge besitzen. Gemäß diesem Prinzip sind Nennhübe von bis zu 30.000 mm realisierbar, wobei durch die Anordnung zusätzlicher Zwischenträger maximaler Länge beliebig große Nennhübe möglich sind. Gemäß den vorgegebenen Prinzipien kann jedoch jeweils ein Zwischenträger nur eine maximale Länge von 10.033 mm aufweisen und wird durch einen Anfangs-und Endträger mit jeweils annähernd gleicher Länge ergänzt. In bevorzugter Ausbildung ist weiterhin vorgesehen, dass jeweils zwischen zwei hintereinander angeordneten Anfangs-, Zwischen- und Endträgern ein Verbindungsstück vorgegebener Länge angeordnet ist. Durch derartige Verbindungsstücke ist eine weitere Modulklasse gebildet, deren Einzelelemente eine Länge von bevorzugt 20 mm aufweisen. Die oben genannten Prinzipien zur Kombination mehrerer Träger erfüllen am besten die Anforderungen an einen möglichst steifen Aufbau der gesamten Vorrichtung, so dass auch sehr schwere bzw. schwer beladene Wägen positionsgenau auf der Vorrichtung bewegt werden können, ohne dass Gewichtskraft bedingte Verformungen an derselben auftreten, die zu einer Lageverschiebung des Fundaments des Roboters auf dem Fahrwagen führen könnten. In bevorzugter Ausführung ist vorgesehen, dass an dem Anfangs- und Endträger jeweils endseitig bezüglich der Trägerstruktur ein Bügel angeordnet ist. Ein Einzelträger weist einen derartige Bügel an beiden Enden auf.

Nachfolgend ist die Erfindung anhand bevorzugter Ausführungsformen unter Bezugnahme auf die Zeichnungen näher erläutert, anhand welcher sich weitere Eigenschaften und Vorteile der Erfindung ergeben. Dabei zeigen:
- Fig. 1: eine Explosionsdarstellung einer Vorrichtung zur geradlinigen Verlagerung eines Wagens in perspektivischer Ansicht, anhand welcher der erfindungsgemäße Aufbau aus Einzelmodulen unterschiedlicher Modulklassen schematisiert ist;
- Fig. 2: eine Detailansicht des in Fig. 1 gezeigten Fahrwagens in zusammengebautem Zustand, durch welchen ein Teil der schienengeführten Wagens gebildet ist;
- Fig. 3: die in Fig. 1 gezeigte Vorrichtung zur geradlinigen Verlagerung eines Wagens in zusammengebautem Zustand in perspektivischer Ansicht, wobei nur die Trägereinheit ohne den zugeordneten Wagen gezeigt ist;
- Fig. 4: die in Fig. 1 gezeigte Vorrichtung zur geradlinigen Verlagerung eines Wagens in zusammengebautem Zustand in perspektivischer Ansicht, wobei die Trägereinheit mit dem Wagen gezeigt ist;
- Fig. 5: eine Tabelle mit einer Auswahl von standardisierten Längenabmessungen (in Millimetern) von Einzelmodulen in Form von einzelnen Trägern, Verbindungsstücken, Schienen und Zahnstangen und jeweiligen Zusammenstellungen derselben, um einem vorgegebenem Nennhub bzw. Nutzhub zu entsprechen;
- Fig. 6: eine Tabelle mit einer Auswahl von Anzahl und Kombinationen von Schienen standardisierter Längenabmessungen (in Millimetern), entsprechend einem vorgegebenen Nennhub für einen Wagen;
- Fig. 7: eine Tabelle mit einer Auswahl von Anzahl und Kombinationen von Zahnstangen standardisierter Längenabmessungen (in Millimetern), entsprechend den in Fig. 6 gezeigten Kombinationen von Schienen für einen vorgegebenen Nennhub für einen Wagen.

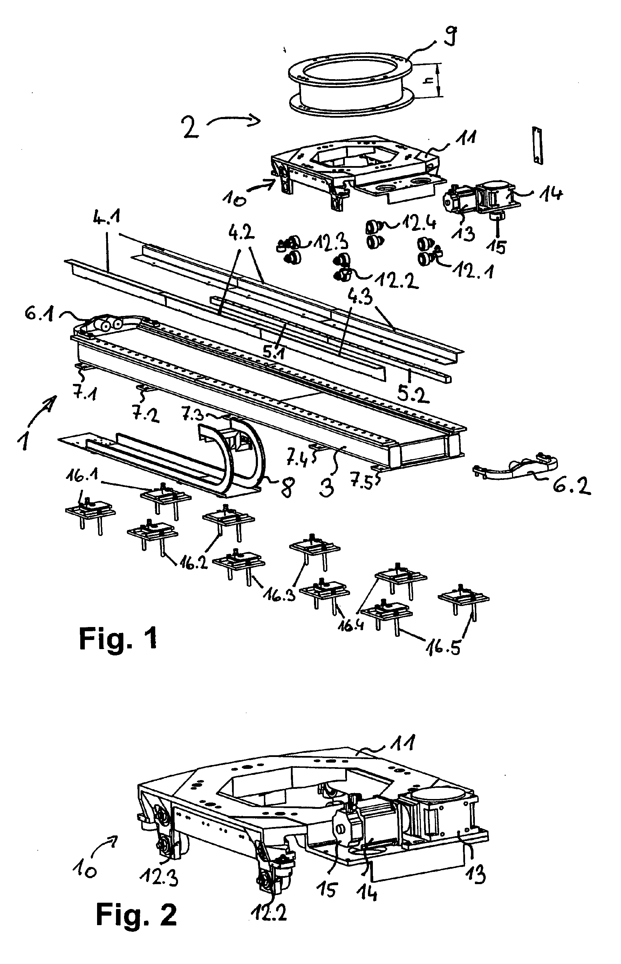

Die in Fig. 1 gezeigte Vorrichtung zur geradlinigen Verlagerung eines Roboters weist eine schienenartige Trägerstruktur 1 und einen schienengeführten Wagen 2 auf, die jeweils erfindungsgemäß aus unterschiedlichen Einzelmodulen unterschiedlicher Modulklassen baukastenartig zusammengebaut sind, wie es durch die gewählte Explosionsdarstellung veranschaulicht ist.

Die schienenartige Trägerstruktur 1 ist durch ein Schienenträgerelement 3, drei Schienenpaaren 4.1, 4.2, 4.3 zwei Zahnstangen 5.1, 5.2 sowie zwei Bügel 6.1, 6.2, sechs Fundamentplatten 7.1 bis 7.5 und eine Kabelschleppkette 8 gebildet. Dabei sind die Schienenpaare 4.1, 4.2, 4.3 entlang der Oberseite des im wesentlichen quaderförmigen Schienenträgerelements 3 und in verlagerungsrichtung des Wagens hintereinander angeordnet und übernehmen die Funktion einer Führung des Wagens 2. Die Schienenpaare 4.1, 4.2, 4.3 sind gleichlang ausgebildet, können jedoch bei anderen Anforderungen in ihrer Länge voneinander abweichen. Ebenfalls hintereinander und parallel entlang einer der Außenseiten der Schienenpaare 4.1, 4.2, 4.3 sind die Zahnstangen 5.1, 5.2 angeordnet, welche zur Aufnahme eines Zahnrades am Antrieb des Wagens 2 ausgebildet sind. Die Längen der Zahnstangen 5.1, 5.2 sind derart gewählt, dass ein zu den gegenseitigen Angrenzungspunkten der Schienenpaare 4.1, 4.2, 4.3 benachbartes Angrenzen jeweils zweier Zahnstangen 5.1, 5.2 vermieden. Die Gesamtlänge der von den beiden Zahnstangen 5.1, 5.2 gebildeten Bahn ist dabei etwas geringer als die Gesamtlänge der von den Schienenpaaren 4.1, 4.2, 4.3 gebildeten Schienenbahn, wobei der Längenunterschied maximal der räumlichen Ausdehnung eines auf den Schienen geführten Wagens entspricht. Alternativ ist es möglich, zu den vorhandenen Zahnstangen 5.1 und 5.2 eine weitere Zahnstange anzuordnen, welche eine kürzere Länge im Vergleich zu den Zahnstangen 5.1 und 5.2 aufweist, um so insgesamt der Gesamtlänge der Schienenbahn zu entsprechen.

Entlang der Unterseite des Schienenträgerelements 3 sind die Fundamentplatten 7.1 bis 7.5 jeweils senkrecht zur Erstreckungsrichtung der Schienenpaare 4.1, 4.2, 4.3 und in jeweils vorgegebener Beabstandung zueinander montiert. Jeweils an der Vorder- bzw. Hinterseite des Schienenträgerelements 3 ist einer der Bügel 6.1, 6.2 angeordnet, die somit an ein jeweiliges Ende der Schienenbahn angrenzen, welche durch die Schienenpaare 4.1, 4.2, 4.3 gebildet ist. Ferner ist die Kabelschleppkette 8 seitlich entlang des quaderförmigen Schienenträgerelements 3 angeordnet.

Der schienengeführte Wagen 2 ist optional durch eine zylinderförmige Konsole 9 zur Aufnahme des Roboters und einen Fahrwagen 10 gebildet, auf welchem eine Konsole 9 befestigt sein kann. Der Fahrwagen 10 wiederum weist eine im wesentlichen quadratische Lagerungsplatte 11 auf, unterhalb welcher in dem Bereich deren Ecken jeweils eines von vier Radelementen 12.1 bis 12.4 zur Fortbewegung auf der Schienenbahn 4.1, 4.2, 4.3 montiert ist. Zum Antrieb des Wagens 2 ist entlang einer Kante der Lagerungsplatte 11 ein Motor 13 mit einem Getriebe 14 und einem daran angeordneten Zahnrad 15 vorgesehen, wobei das Zahnrad 15 zum Eingreifen in die Zähne der Zahnstangen 4.1, 4.2, 4.3 ausgebildet ist.

Jedes der genannten Einzelmodule der Trägerstruktur 1 bzw. des Wagens 2 ist jeweils einer Modulsklasse zugeordnet. Dabei sind mehrfach bezeichnete und dargestellte Einzelmodule, beispielsweise die Zahnstangen 4.1, 4.2, 4.3 jeweils derselben Modulklasse zugeordnet. Durch die Gesamtheit der Modulklassen ist somit ein Baukasten gebildet, durch den zum einen der Aufbau einer erfindungsgemäßen Verlagerungsvorrichtung in gewissem Maße standardisiert ist, zum anderen ein hoher gestalterischer Freiraum unter verschiedenartigen Bedingungen und für unterschiedliche Anwendungen verbleibt.

Wesentlich dabei ist, dass einige der Modulklassen Einzelmodule mit unterschiedlichen Eigenschaften aufweisen. Dies betrifft insbesondere die Modulklassen der Schienenpaare 6.1, 6.2, der Zahnstangen 5.1, 5.2 und des Schienenträgerelements 3, die jeweils einen Satz von Einzelmodulen mit unterschiedlicher Länge aufweisen. Dadurch wird ermöglichst, dass beispielsweise bei vorgegebenem Verlagerungsweg des Roboters die zugehörigen Schienenpaare 4.1, 4.2, 4.3 hinsichtlich der linearen Führungseigenschaften der von diesen gebildeten Schienenbahnen bzw. den Stabilitätsanforderungen an die Gesamtvorrichtung in vorteilhafter Anzahl und Länge zusammengestellt und montiert werden. Die vorgegebenen Prinzipien der Zusammenstellung können auf empirischen Erfahrungswerten oder theoretischen Berechnungen beruhen und beispielsweise anhand einer Tabelle schnell erfasst werden.

In einer solchen Tabelle können auch die einer gewissen Zusammenstellung von Einzelmodulen einer Modulklasse korrespondierende Zusammenstellung der Einzelmodule einer anderen Modulklasse dargestellt sein. Eine derartige korrespondierende Zusammenstellung ist beispielsweise bei der Anordnung der Zahnstangen 5.1, 5.2 neben den Schienenpaaren 4.1, 4.2, 4.3 vorteilhaft, um zu vermeiden, dass die Angrenzungspunkte jeweils zweier Zahnstangen 5.1, 5.2 mit den Angrenzungspunkten der Schienenpaare 4.1, 4.2, 4.3 zusammentreffen, wodurch die Linearitätseigenschaften der Anordnung negativ beeinflusst werden. Dabei müssen die Längen der Zahnstangen 5.1, 5.2 auch anderen Anforderungen genügen, beispielsweise einer vorgegebenen Dimensionierung der auf ihnen ausgebildeten Zähne entsprechen, so dass diese nur vollständig ausgebildete Zähne aufweisen und kein unerwünschter Freiraum zwischen zwei benachbarten Zähnen verbleibt.

Ebenso nach vorgegebenen - empirisch oder theoretisch ermittelten - Prinzipien erfolgt die Zusammenstellung der Fundamentplatten 7.1 bis 7.5, hinsichtlich ihrer Anzahl und ihrer gegenseitigen Beabstandung bei der Montage, um den Stabilitätsanforderungen bei vorgegebener Länge insbesondere der Schienenbahn zu entsprechen. An den jeweiligen Endseiten der Fundamentplatten 7.1 bis 7.5 senkrecht zur Verlagerungsrichtung des Wagens 2 können beispielsweise jeweils zugeornete Bodenanker 16.1 bis 16.5 vorgesehen sein, durch welche vorteilhaft eine feste und stabile Verbindung der erfindungsgemäßen Vorrichtung 1 mit dem Boden gewährleistet ist.

In der in Fig. 1 gezeigten Vorrichtung ist der geradlinige Verlagerungsweg eines Roboters auf nur einem Schienenträgerelemente 3 realisiert. Zur Verlängerung dieses Weges kann die Anordnung mehrerer solcher Schienenträgerelemente 3 hintereinander vorgesehen sein, wobei die jeweils äußeren Schienenträgerelemente 3 nur einen endseitig angeordneten Bügel 6.1, 6.2 aufweisen, während dazwischen angeordnete Schienenträgerelemente 3 keine dieser Bügel 6.1, 6.2 aufweisen.

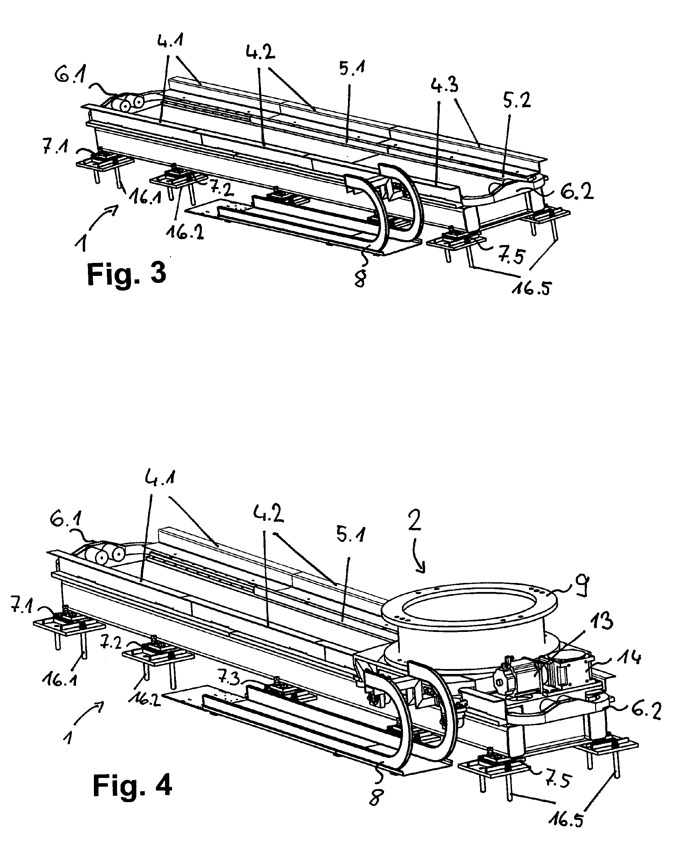

Die Fig. 2 zeigt den in der Fig. 1 gezeigten Fahrwagen 10 in einer Detailansicht und im zusammengebauten Zustand. In Fig. 3 ist nur die Trägereinheit 1 in zusammengebautem Zustand und ohne den zugeordneten Wagen dargestellt. Die Fig. 4 zeigt den auf der Trägereinheit 1 installierten Wagen 2 in jeweils zusammengebautem Zustand.

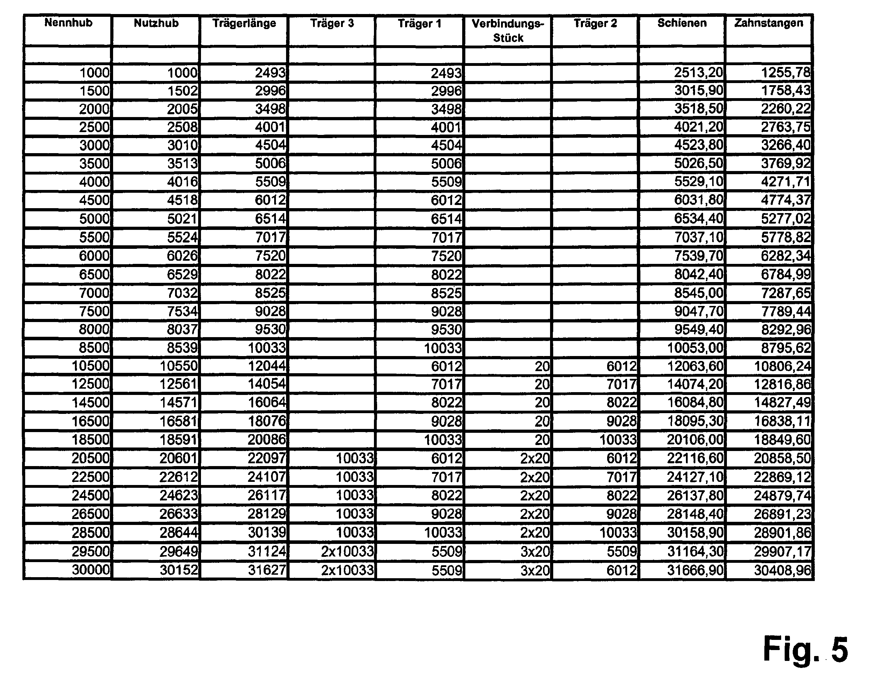

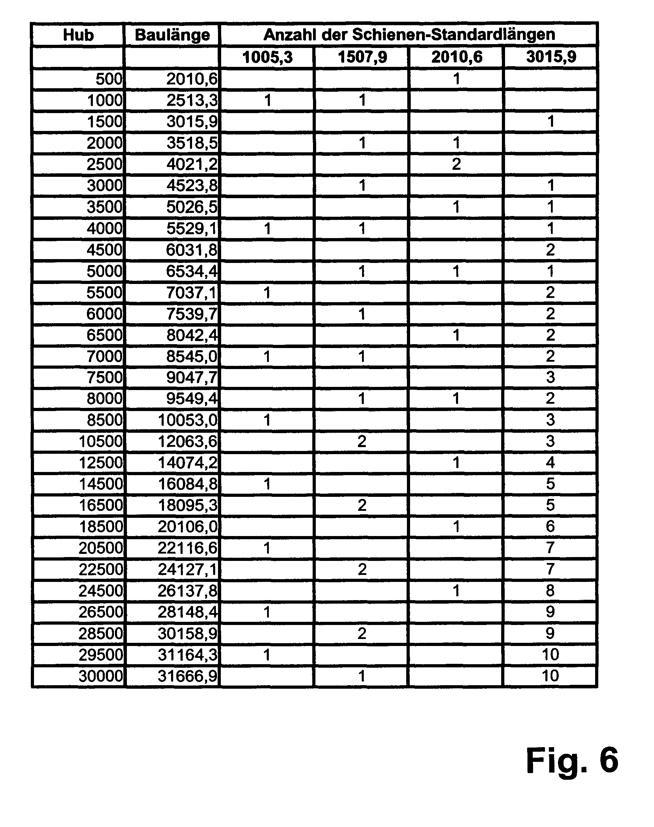

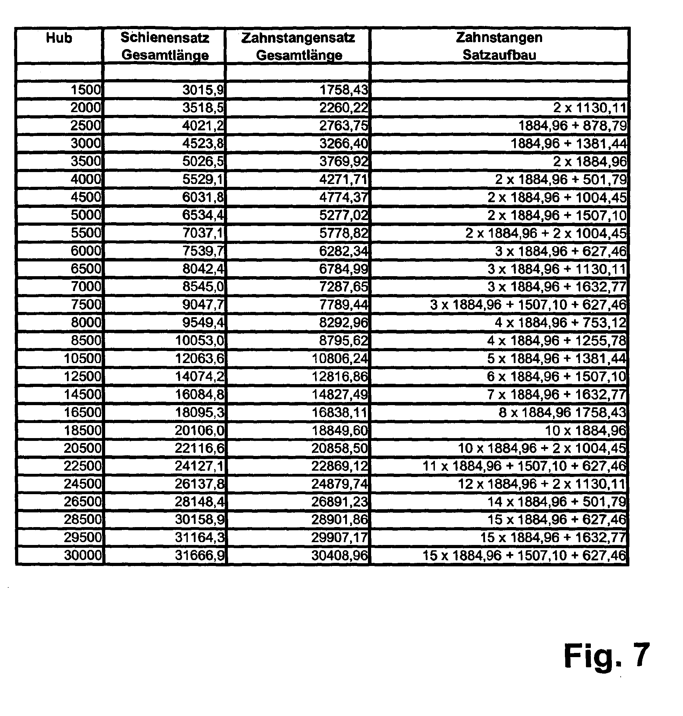

Die Fig. 5 zeigt eine Tabelle mit einer empirischen Zusammenstellung einer Auswahl von standardisierten Längenabmessungen (in Millimetern) von Einzelmodulen in Form von einzelnen Trägern, Verbindungsstücken, Schienen und Zahnstangen und jeweiligen Zusammenstellungen derselben, um einem vorgegebenem Nennhub bzw. Nutzhub (in Millimetern) zu entsprechen. Die vorgesehene Anzahl und Kombination von Schienen standardisierter Längenabmessungen (in Millimetern) für die jeweiligen Nennhübe sind in der Tabelle in Fig. 6 eingetragen. Die Tabelle in Fig. 7 zeigt die entsprechende Auswahl von Anzahl und Kombinationen von Zahnstangen standardisierter Längenabmessungen (in Millimetern), entsprechend den in Fig. 6 gezeigten Kombinationen von Schienen für einen vorgegebenen Nennhub. Eine derartige tabellarische Zusammenstellung der benötigten Einzelmodule für unterschiedliche Anforderungsprofile ermöglicht dem Fachmann eine bedarfsweise Zusammenstellung einer erfindungsgemäßen Vorrichtung nach vorgegebenen Prinzipien.

### Bezugszeichenliste

- 1: Trägereinheit
- 2: Wagen
- 3: Schienenträgerelement
- 4.1, 4.2, 4.3: Schienenpaare
- 5.1, 5.2: Zahnstangen
- 6.1, 6.2: Bügel
- 7.1 bis 7.5: Fundamentplatten
- 8: Kabelschleppkette
- 9: Konsole
- 10: Fahrwagen
- 11: Lagerungsplatte
- 12.1 bis 12.4: Radelemente
- 13: Motor
- 14: Getriebe
- 15: Zahnrad
- 16.1 bis 16.5: Bodenanker

## Patentansprüche

1. Vorrichtung zur geradlinigen Verlagerung mindestens eines Wagens mit einer Trägerstruktur und Schienen zur Führung des mindestens einen Wagens, **dadurch gekennzeichnet, dass** zumindest die Trägerstruktur (1) aus Einzelmodulen (3, 4.1, 4.2, 4.3, 5.1, 5.2, 6.1, 6.2, 7.1 bis 7.5) einer Mehrzahl von Modulklassen aufgebaut ist, von denen wenigstens eine Modulklasse Einzelmodule (3, 4.1, 4.2, 4.3, 5.1, 5.2) unterschiedlich standardisierter Länge umfasst, wobei die Trägerstruktur (1) durch Auswahl von Einzelmodulen (3, 4.1, 4.2, 4.3, 5.1, 5.2) möglichst großer standardisierter Länge zusammengestellt ist.

2. Vorrichtung nach Anspruch 1, **dadurch gekennzeichnet, dass** Einzelmodule (3, 4.1, 4.2, 4.3, 5.1, 5.2) in wenigstens einer Modulklasse mit unterschiedlicher Länge in Verlagerungsrichtung des Wagens (2) ausgebildet sind.

3. Vorrichtung nach Anspruch 2, **gekennzeichnet durch** die Anordnung von Einzelmodulen einer Modulklasse mit möglichst geringem Längenunterschied, insbesondere einem Längenunterschied gleich null.

4. Vorrichtung nach einem der Ansprüche 1 bis 3, **gekennzeichnet durch** die Anordnung wenigstens zweier hinsichtlich eines Unterscheidungsmerkmals identisch und/oder unterschiedlich ausgebildeter Einzelmodule (3, 4.1, 4.2, 4.3, 5.1, 5.2, 6.1, 6.2, 7.1 bis 7.5) jeweils derselben Modulklasse.

5. Vorrichtung nach einem der Ansprüche 1 bis 4, **gekennzeichnet durch** eine Zusammenstellung von Einzelmodulen (3, 4.1, 4.2, 4.3, 5.1, 5.2, 6.1, 6.2, 7.1 bis 7.5) hinsichtlich der vorgegebenen Gesamtlänge und/oder der Steifigkeit der von diesen gebildeten Trägerstruktur und/oder eines vorgegebenen Verfahrenswegs des Wagens.

6. Vorrichtung nach einem der Ansprüche 1 bis 5, **dadurch gekennzeichnet, dass** wenigstens eine Modulklasse durch Einzelmodule in Form von Schienenpaaren (4.1, 4.2, 4.3) gebildet ist.

7. Vorrichtung nach einem der Ansprüche 1 bis 6, **dadurch gekennzeichnet, dass** die Modulklasse der Schienenpaare (4.1, 4.2, 4.3) Einzelmodule mit wenigstens zwei, bevorzugt vier, standardisierten Längen umfasst.

8. Vorrichtung nach Anspruch 7, **dadurch gekennzeichnet, dass** wenigstens eine der standardisierten Längen einem Betrag von 3.015,9mm und wenigstens eine andere der standardisierten Längen einem Betrag von 1.005,3mm oder 1.507,9mm oder 2.010,6mm entspricht.

9. Vorrichtung nach einem der Ansprüche 1 bis 8, **dadurch gekennzeichnet, dass** wenigstens eine Modulklasse durch Einzelmodule in Form von Zahnstangen (5.1, 5.2) zur Aufnahme eines Zahnrades (15) an dem Antrieb des Wagens (2) gebildet ist.

10. Vorrichtung nach Anspruch 9, **dadurch gekennzeichnet, dass** die Modulklasse der Zahnstangen Einzelmodule (5.1, 5.2) mit standardisierten Längen aufweist, die hinsichtlich der Ausdehnung der in diesen ausgebildeten Zähnen und/oder hinsichtlich der Ausdehnung des Wagens (2) in Verlagerungsrichtung des Wagens vorteilhaft bemessen sind.

11. Vorrichtung nach Anspruch 9 oder 10 und Anspruch 7 oder 8, **dadurch gekennzeichnet, dass** die Modulklasse der Zahnstangen Einzelmodule (5.1, 5.2) mit standardisierten Längen aufweist, die hinsichtlich einer parallelen Anordnung von Zahnstangen (5.1, 5.2) und Schienen (4.1, 4.2, 4.3) vorteilhaft bemessen sind.

12. Vorrichtung nach einem der Ansprüche 7 bis 11, **dadurch gekennzeichnet, dass** wenigstens eine Modulklasse durch Einzelmodule in Form von Schienenträgerelementen (3) gebildet ist.

13. Vorrichtung nach Anspruch 12, **gekennzeichnet durch** die Anordnung wenigstens eines Schienenpaares (4.1, 4.2, 4.3) auf jeweils einem Schienenträgerelement (3), wobei die Anzahl und Länge der jeweiligen Schienenpaare (4.1, 4.2, 4.3) mit der Länge des zugeordneten Schienenträgerelements (3) nach vorgegebenen Prinzipien korrespondiert.

14. Vorrichtung nach Anspruch 12 oder 13, **dadurch gekennzeichnet, dass** wenigstens eine Modulklasse durch Einzelmodule in Form von identisch ausgebildeten Fundamentplatten (7.1 bis 7.5) zur Bodenbefestigung der Schienenträgerelemente (3) gebildet ist, wobei die Anzahl und die gegenseitige Beabstandung angeordneter Fundamentplatten (7.1 bis 7.5) mit der Länge des zugeordneten Schienenträgerelements (3) nach vorgegebenen Prinzipien korrespondiert.

15. Vorrichtung nach einem der Ansprüche 1 bis 14, **dadurch gekennzeichnet, dass** die Trägerstruktur (1) aus einem Anfangs- und Endträger und gegebenenfalls wenigstens einem Zwischenträger gebildet ist, die in Verlagerungsrichtung des Wagens hintereinander angeordnet sind.

16. Vorrichtung nach Anspruch 15, **dadurch gekennzeichnet, dass** Anfangs-, Zwischen- und Endträger durch eine jeweils spezifische Zusammenstellung von jeweiligen Einzelmodulen (3, 4.1, 4.2, 4.3, 5.1, 5.2, 6.1, 6.2, 7.1 bis 7.5) wenigstens einer Modulklasse gebildet sind.

17. Vorrichtung nach Anspruch 15 oder 16, **dadurch gekennzeichnet, dass** jeweils zwischen zwei hintereinander angeordneten Anfangs-, Zwischen- und Endträgern ein Verbindungsstück vorgegebener Länge angeordnet ist und/oder an dem Anfangs- und Endträger jeweils endseitig bezüglich der Trägerstruktur ein Bügel (6.1, 6.2) angeordnet ist.

18. Vorrichtung nach einem der Ansprüche 1 bis 17, **dadurch gekennzeichnet, dass** auch der Wagen (2) aus Einzelmodulen (9, 10, 11, 12.1 bis 12.4, 13, 14, 15) einer Mehrzahl von Modulklassen zusammengesetzt ist.

19. Verfahren zum Standardisieren einer Vorrichtung zum geradlinigen Verlagern mindestens eines Wagens hinsichtlich variierender Anforderungen des Verlagerungsweges, wobei die Vorrichtung eine Trägerstruktur mit Schienen zur Führung des mindestens einen Wagens aufweist, **dadurch gekennzeichnet, dass** zumindest die Trägerstruktur aus Einzelmodulen einer Mehrzahl von Modulklassen aufgebaut wird, von denen wenigstens eine Modulklasse Einzelmodule unterschiedlich standardisierter Länge umfasst, wobei die Trägerstruktur durch Auswählen von Einzelmodulen möglichst großer standardisierter Länge zusammengestellt wird.

20. Verfahren nach Anspruch 19, **gekennzeichnet durch** geeignetes Auswählen wenigstens eines Einzelmoduls bezüglich seiner Länge und/oder seiner Längendifferenz in Verlagerungsrichtung des Wagens als Unterscheidungsmerkmal zu anderen Einzelmodulen derselben Modulklasse.

21. Verfahren nach Anspruch 20, **gekennzeichnet durch** ein Auswählen von Einzelmodulen einer Modulklasse mit möglichst geringem Längenunterschied, insbesondere mit einem Längenunterschied gleich null.

22. Verfahren nach einem der Ansprüche 19 bis 21, **dadurch gekennzeichnet, dass** wenigstens zwei hinsichtlich eines Unterscheidungsmerkmals identische und/oder unterschiedliche Einzelmodule aus derselben Modulklasse ausgewählt werden.

23. Verfahren nach einem der Ansprüche 19 bis 22, **dadurch gekennzeichnet, dass** wenigstens zwei hinsichtlich eines Unterscheidungsmerkmals einander korrespondierende Einzelmodule aus unterschiedlichen Modulklassen ausgewählt werden.

24. Verfahren nach einem der Ansprüche 19 bis 23, **dadurch gekennzeichnet, dass** Einzelmodule hinsichtlich der Gesamtlänge und/oder der Steifigkeit der von diesen gebildeten Trägerstruktur und/oder eines vorgegebenen Verfahrenswegs des Wagens zusammengestellt werden.
